# EUROPEAN PATENT APPLICATION

(11) **EP 4 395 378 A1**
(43) Date of publication of application: **03.07.2024**
(21) Application number: 22307045.9
(22) Date of filing: 26.12.2022
(51) Int. Cl.: H04W 4/50, H04L 9/40, H04W 12/041

(54) **A METHOD FOR PROVISIONING A USER EQUIPMENT WITH CREDENTIALS IN A PRIVATE TELECOMMUNICATION NETWORK**

(71) Applicant: THALES DIS FRANCE SAS, 92190 Meudon (FR)
(72) Inventor: DANY, Vincent, 13400 AUBAGNE (FR); PAULIAC, Mireille, 13470 CARNOUX EN PROVENCE (FR); DELAVEAU, François, 94170 Le Perreux-sur-Marne (FR); PANAITOPOL, Dorin, 92250 La Garenne-Colombes (FR)
(74) Representative: Scheer, Luc

(57) **Abstract**

The present invention proposes a method for provisioning a user equipment 10 with credentials in a private telecommunication network, the private telecommunication network comprising a credentials holder 12 and a gNB/AMF or a eNB/MME, the method comprising:
a) Sending from the user equipment 10 to the gNB/AMF or eNB/MME 11 a provisioning request;
b) Establishing a PLS key between the user equipment 10 and the gNB/AMF or eNB/MME 11 thanks to Physical Layer Security;
c) Sending from the user equipment 10 to the gNB/AMF or eNB/MME 11 a message comprising data permitting to identify the user of the user equipment and/or the user equipment 10, the message being protected in integrity and confidentiality by the PLS key or by keys derived from the PLS key;
d) Sending from the gNB/AMF or eNB/MME 11 to the credentials holder 12 the data permitting to identify the user of the user equipment and/or the user equipment 10;
e) Verifying at the credentials holder 12 the data permitting to identify the user of the user equipment and/or the user equipment 10;
f) If the verification is positive, allocating at the credentials holder 12 a unique subscription identifier to the user equipment 10 and generating corresponding keys and security parameters;
g) Sending from the credentials holder 12 to the gNB/AMF or eNB/MME 11 the unique subscription identifier, the corresponding keys and the security parameters;
h) Sending from the gNB/AMF or eNB/MME 11 to the user equipment 10 in a message protected in integrity and confidentiality by the PLS key or by keys derived from the PLS key the unique subscription identifier, the corresponding keys and the security parameters, the credentials comprising the subscription identifier, the corresponding keys and the security parameters.

## Description

The present invention concerns telecommunications and in particular methods for provisioning a user equipment with credentials in a private telecommunication network.

It is known that it is necessary to secure the provisioning of initial credentials between a UE (User Equipment) and a home network (e.g. credentials for primary authentication). This is still a complex/constraining procedure.

In particular, the home network can be a private network (PN) hosting a gNB/AMF (gNodeB / Access and Mobility Management Function) or a eNB/MME (eNodeB / Mobility Management Entity) and a credentials holder (for example a ARPF/UDM standing for Authentication Credential Repository and Processing Function / Unified Data Management, or a AuC standing for Authentication Center). The ARPF is a functional element of the UDM, responsible for generating 5G HE AV (5G Home Environment Authentication Vectors) based on the subscriber's shared key.

The UE can be a telecommunication terminal cooperating or not with a secure element, like a eUICC (embedded UICC) or iUICC (integrated UICC).

Existing solutions require the UE to be provisioned with pre-configured credentials (e.g. certificate or public key), required to have connection with a remote server of the home network of the MNO (Mobile Network Operator) handling the private network.

Those requirements may be too costly, or not possible to fulfill (e.g. connection with remote server) in the scope of private networks.

A known technology called PLS (Physical Layer Security) is a promising approach that can benefit traditional encryption methods. The idea of PLS is to take advantage of the propagation medium's features and radio channel impairments in order to ensure secure communication at the physical layer. PLS is a technology foreseen to address 6G security, e.g. PLS is mentioned in several white papers for 6G technology. Apple^{™} proposed to study its usage in the scope of 3GPP in the S3-213987 contribution presented during SA3 November 2021 meeting.

In this document, it is exposed that 5G security mainly rely on the traditional cryptography based on pre-provisioned key at upper layers of the protocol stack, while PLS is expected to provide another layer of defense besides upper layer cryptographic techniques and could be leveraged to resist advanced attacking technologies (e.g. quantum computing), based on the physical layer process, artificial noise injection or secure beam-forming design, etc.

PLS leverages intrinsic randomness properties of a wireless channel to establish a key between two wireless entities, without the need of pre-distributed credentials. An eavesdropper present in the same area cannot guess/retrieve the key established between the two wireless entities.

In the state of the art, no solution exists for generating keys at the level of a UE and a private home network without having provisioned these two entities before.

The proposed invention proposes a solution to this problem.

More precisely, the present invention proposes to rely on PLS to perform provisioning of credentials between a UE/device and a credential holder.

The present invention proposes a method for provisioning a user equipment with credentials in a private telecommunication network, the private telecommunication network comprising a credentials holder and a gNB/AMF or a eNB/MME, the method comprising:
a) Sending from the user equipment to the gNB/AMF or eNB/MME a provisioning request;
b) Establishing a PLS key between the user equipment and the gNB/AMF or eNB/MME thanks to Physical Layer Security;
c) Sending from the user equipment to the gNB/AMF or eNB/MME a message comprising data permitting to identify the user of the user equipment and/or the user equipment, the message being protected in integrity and confidentiality by the PLS key or by keys derived from the PLS key;
d) Sending from the gNB/AMF or eNB/MME to the credentials holder the data permitting to identify the user of the user equipment and/or the user equipment;
e) Verifying at the credentials holder the data permitting to identify the user of the user equipment and/or the user equipment;
f) If the verification is positive, allocating at the credentials holder a unique subscription identifier to the user equipment and generating corresponding keys and security parameters;
g) Sending from the credentials holder to the gNB/AMF or eNB/MME the unique subscription identifier, the corresponding keys and the security parameters;
h) Sending from the gNB/AMF or eNB/MME to the user equipment in a message protected in integrity and confidentiality by the PLS key or by keys derived from the PLS key the unique subscription identifier, the corresponding keys and the security parameters, the credentials comprising the subscription identifier, the corresponding keys and the security parameters. Preferably, the data permitting to identify the user of the user equipment and/or the user equipment are at least one of:
   - the user equipment Id;
   - the user Id;
   - a provisioning code.

Advantageously, steps -c- and -d- also comprise sending a provisioning code and step -e- also comprises a verification of the provisioning code.

Also, steps -c- and -d- also comprise preferably sending a time label and/or a localization information and step -e- also comprises a verification of the time label and/or the localization information.

Preferably, the credentials are stored in a secure element of the user equipment or in the mobile equipment of the user equipment.

Advantageously, the unique subscription identifier is an IMSI or a SUPI.

In a preferred implementation, the credentials holder is constituted by a ARPF/UDM or a AuC. The invention also concerns a method for provisioning a credentials holder with credentials in a private telecommunication network, the private telecommunication network comprising a user equipment and a gNB/AMF or a eNB/MME, the method comprising:
a) Sending from the user equipment to the gNB/AMF or eNB/MME a provisioning request;
b) Establishing a PLS key between the user equipment and the gNB/AMF or eNB/MME thanks to Physical Layer Security;
c) Sending from the user equipment to the gNB/AMF or eNB/MME a message comprising data permitting to identify the user of the user equipment and/or the user equipment, the message being protected in integrity and confidentiality by the PLS key or by keys derived from the PLS key;
d) Sending from the gNB/AMF or eNB/MME to the credentials holder the data permitting to identify the user of the user equipment and/or the user equipment;
e) Verifying at the credentials holder the data permitting to identify the user of the user equipment and/or the user equipment;
f) If the verification is positive, allocating at the credentials holder a unique subscription identifier to the user equipment;
g) Sending from the credentials holder to the gNB/AMF or eNB/MME the unique subscription identifier;
h) Sending from the gNB/AMF or eNB/MME to the user equipment in a message protected in integrity and confidentiality by the PLS key or by keys derived from the PLS key the unique subscription identifier;
i) Generating at the user equipment keys and security parameters;
j) Sending from the user equipment to the gNB/AMF or eNB/MME the keys and security parameters protected in integrity and confidentiality by the PLS key or by keys derived from the PLS key;
k) Sending from the gNB/AMF or eNB/MME the received keys and security parameters to the credentials holder, the credentials comprising the keys, the security parameters and the unique subscription identifier.

Preferably, the data permitting to identify the user of the user equipment and/or the user equipment are at least one of:
- the user equipment Id;
- the user Id;
- a provisioning code.

Advantageously, steps -c- and -d- also comprise sending a provisioning code and step -e- also comprises a verification of the provisioning code.

Preferably, steps -c- and -d- also comprise sending a time label and/or a localization information and step -e- also comprises a verification of the time label and/or the localization information.

The credentials are preferably stored in a secure element of the user equipment or in the mobile equipment of the user equipment.

Preferably, the unique subscription identifier is an IMSI or a SUPI.

Advantageously, the credentials holder is constituted by a ARPF/UDM or a AuC.

The present invention will be better understood by reading the following description of the figures that represent:
- Figure 1 a method where a credentials holder provides data to a UE to be provisioned;
- Figure 2 a method where a UE provides data to a credentials holder to be provisioned.

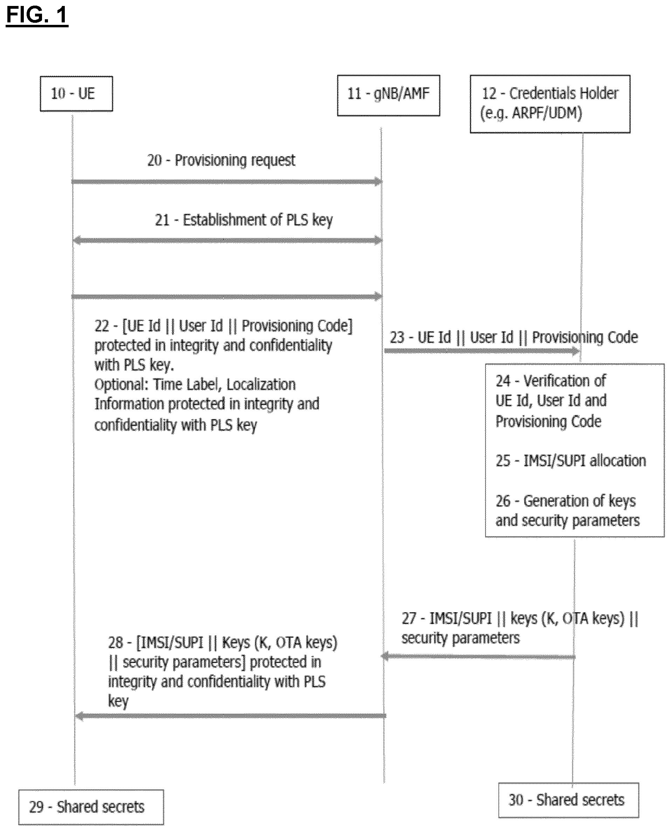

Figure 1 represents a method where a credentials holder provides data to a UE to be provisioned.

In this figure, the UE has to be provisioned with some data among them a long term key K, OTA keys and security parameters. These data are part of credentials to be shared between the UE and the credentials holder.

In this figure, three entities are represented:
- A UE 10 comprising (or cooperating) or not with a secure element;
- A gNB/AMF or a eNB/MME 11. A gNB is a base station in a 5G telecommunication network and a eNB a base station in a 4G telecommunication network. The following description will be done for a 5G network but for a 4G network, the terms gNB/AMF have to be replaced by eNB/MME;

- A credentials holder 12, for example constituted by a ARFP/UDM (5G) or a AuC (4G).

These three entities are in a private network.

The first step 20 of the method consists in transmitting from the UE 10 to the gNB/AMF 11 a request for provisioning the UE 10 with credentials.

At step 21, a PLS key is established between the UE 10 and the gNB/AMF 11 thanks to Physical Layer Security. This PLS key is a key identical at the level of the UE 10 and the gNB/AMF 11 assuming symmetric radio channel characteristics.

At step 22, the UE 10 sends to the gNB/AMF 11 in a message protected by the PLS key (by a ciphering operation) in integrity and confidentiality a UE Id (UE Identifier) and a User Id (User identifier). This is only an example. All data permitting to identify the user or the user equipment can be sent from the UE 10 to the gNB/AMF 11.

For example, it is possible to transmit one or several of the following data:
- the user equipment (UE) Id;
- the user Id;
- a provisioning code (described hereafter).

So, for example, it is possible to send:
- the UE Id alone
- the user Id alone
- the UE Id and the user Id
- the provisioning code alone
- the user Id and the provisioning code
- the UE Id and the provisioning code
- the UE Id and the user Id and the provisioning code

In fact, it is also possible to use, instead of the PLS key, keys derived from this PLS key. Practically, two keys are derived from the PLS key: one for protecting the integrity of the message, and the other one for protecting the confidentiality of that message.

The provisioning code is for example a QR code previously scanned by the UE 10 or a code received by the user through Internet permitting the user to identify itself to the gNB/AMF 11. A provisioning code can also be sent by the UE 10 to the gNB/AMF 11.

This presence of the provisioning code is recommended to ensure that the provisioning request received by the credentials holder 12 comes from a user equipment 10 entitled for provisioning. Such a mechanism could be a provisioning code received through out of band management by the user of the user equipment 10 and provided in request to the gNB/AMF or eNB/MME 11 and credentials holder 12.

Also optionally, a Time Label and a Localization Information of the UE 10 can be also transmitted to the gNB/AMF 11, also protected by the PLS key. These data can be used as additional security mechanisms, e.g. to assure where the UE is located and where the PLS measurement has been done. Time Label and Localization Information could be also advantageously used on top of provisioning mechanisms. For instance, with respect to Time Label and Location Information, one or both parameters can be (generally) used by PLS in order to perform the PLS key reconciliation and/or to validate that the keys and/or the measurements and/or the messages come from the right user at the right time.

Time Label and Localization Information could be used on UE side or eNB/gNB side, and for instance some other entity (e.g. MME/AMF, and/or ARPF/UDM and/or a AuC.) can perform some correlation/key reconciliation (if required) between the UE and eNB/gNB keys and/or validate the provisioning as a complementary measure.

All these data are preferably concatenated in the message sent by the UE 10 to the gNB/AMF 11 ("II" representing in the figure a concatenation).

Once received, the gNB/AMF 11 can decipher with the PLS key the received message and send the received data (here at least the UE Id and a User Id) to the credentials holder 12. This is performed at step 23. It is here considered that the link between the gNB/AMF 11 and the credentials holder 12 is secured. This solution relies on the assumption that the gNB/AMF 11 is trusted and securely communicates with the ARPF/UDM 12 of the private network. Otherwise, the gNB/AMF 11 can have previously transmitted the PLS key to the credentials holder 12 in an encrypted form. This permits to simply forward the encrypted received message from the UE 10 to the credentials holder 12 without decrypting it in the gNB/AMF 11.

The credentials holder 12 then performs three operations:
- At step 24, it verifies the UE Id and the User Id (and optionally the Provisioning Code, the Time Label and the Localization Information correlation);
- At step 25, if the verification is positive (at least the UE Id and the User Id are recognized by the credentials holder 12), the credentials holder 12 allocates a unique subscription identifier to the UE 10. This unique subscription identifier can for example be an IMSI (in 4G networks) or a SUPI (in 5G networks);
- At step 26, the credentials holder 12 generates keys and security parameters corresponding to this unique subscription identifier. These keys are typically a long term key K and OTA keys. The security parameters are typically an OPc (Operator Secret key) and transport keys.

At step 27, the credentials holder 12 sends in a message the unique subscription identifier (IMSI or SUPI), the keys (long term key K and OTA keys) and the security parameters. These data are preferably concatenated in a single message. Like before, this message is sent in clear if he link between the credentials holder 12 and the gNB/AMF 11 is trusted, otherwise, it is encrypted by the PLS key.

At step 28, the gNB/AMF 11 sends to the UE 10 in a message protected by the PLS key in integrity and confidentiality the unique subscription identifier (IMSI or SUPI), the corresponding keys (long term key K and OTA keys) and the security parameters (OPc and transport keys). These data correspond to the credentials that have to be transmitted to the UE 10 in order that the UE 10 can communicate in a secure manner with the MNO's infrastructure of the private network.

Steps 29 and 30 represent the fact that the UE 10 and the credentials holder 12 share the same keys and that communications can occur between these two entities.

The invention thus achieves this provisioning where PLS is used to establish a key shared between the UE 10 to provision and a gNB/AMF 11 located in the private network.

In the above described method, the data to provision (key K, OTA keys, security parameters) are provided by the UE to the credentials holder 12.

It is also possible to have a symmetric scheme where the data to provision (key K, OTA keys, security parameters) are provided by the credentials holder 12 to the UE 10.

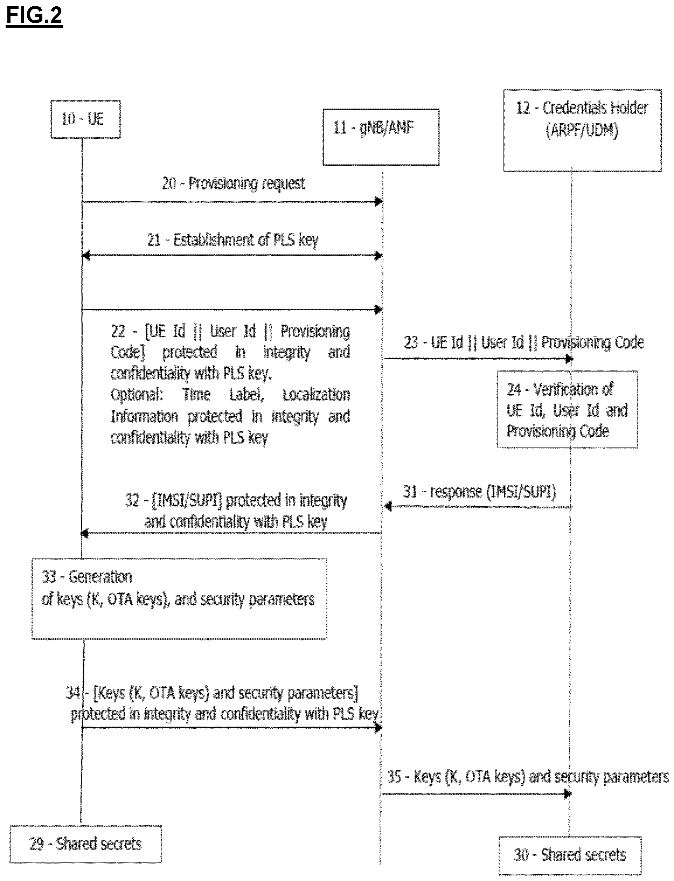

This is described in regard of figure 2.

In this figure, the same elements 10-12 of figure 1 are represented and steps 20 to 24 are identical to steps of figure 1.

At step 31, after the credentials holder 12 having verified the user equipment Id and the User Id (and facultatively the provisioning code), the credentials holder 12 sends to the gNB/AMF or eNB/MME 11 the unique subscription identifier (IMSI or SUPI).

As said before, the data sent to the credentials holder can be at least one of the following data allowing to identify the user and/or the user equipment:
- the user equipment (UE) Id;
- the user Id;
- a provisioning code.

At step 32, the gNB/AMF or eNB/MME 11 sends this unique subscription identifier to the user equipment 10 in a message protected in integrity and confidentiality by the PLS key or by keys derived from the PLS key.

At step 33, the user equipment 10 can then generate keys (long term key K and OTA keys) and security parameters.

These keys and security parameters are then sent by the user equipment 10 at step 34 to the gNB/AMF or eNB/MME 11, by being protected in integrity and confidentiality by the PLS key or by keys derived from the PLS key.

At step 35, the gNB/AMF or eNB/MME 11 sends the decrypted keys and security parameters to the credentials holder 12.

At the end of this procedure, the credentials (shared secrets 29 and 30 as above described in regard of figure 1) comprising the keys, the security parameters and the unique subscription identifier are shared by the user equipment 10 and the credentials holder 12.

Like described in regard of figure 1, at step 22, the provisioning code can also be sent from the user equipment 10 to the ARPF/UDM or a AuC 11 and at step 24, this provisioning code can be verified by the credentials holder 12.

Here, also:
- the credentials can be stored in a secure element of the user equipment 10 or in the mobile equipment of the user equipment 10;
- the unique subscription identifier can be an IMSI or a SUPI;
- the credentials holder can be constituted by a ARPF/UDM or a AuC.

The advantages brought by this invention are the followings:
- There is no need to preconfigure the user equipment 10 with any credential or certificate.
- It is possible to perform credentials provisioning for generic user equipment 10, independent from the targeted private network. The user Id is only a serial number, and there is no customization related to the targeted private network.
- There is no need to have access to a remote server. This is a very useful feature in the scope of private networks since connection to remote server (outside private network coverage) is very often not possible (either for technical reason (e.g. no external link or available external connectivity) or for security reason).
- This solution is very cost effective for both device and server sides, in particular much less costly than RSP (Remote SIM Provisioning). There are minimal BOM (Bill of Materials) and deployment cost in avoiding the usage of PKI and simplifying the architecture.

## Claims

1. A method for provisioning a user equipment (10) with credentials in a private telecommunication network, said private telecommunication network comprising a credentials holder and a gNB/AMF or a eNB/MME (11), said method comprising:
a) Sending (20) from said user equipment (10) to said gNB/AMF or eNB/MME (11) a provisioning request;
b) Establishing (21) a PLS key between said user equipment (10) and said gNB/AMF or eNB/MME (11) thanks to Physical Layer Security;
c) Sending (22) from said user equipment (10) to said gNB/AMF or eNB/MME (11) a message comprising data permitting to identify the user of said user equipment (10) or said user equipment (10), said message being protected in integrity and confidentiality by said PLS key or by keys derived from said PLS key;
d) Sending (23) from said gNB/AMF or eNB/MME (11) to said credentials holder (12) said data permitting to identify said user of said user equipment (10) or said user equipment (10);
e) Verifying (24) at said credentials holder (12) said data permitting to identify said user of said user equipment (10) or said user equipment (10);
f) If said verification is positive, allocating (25) at said credentials holder (12) a unique subscription identifier to said user equipment (10) and generating (26) corresponding keys and security parameters;
g) Sending (27) from said credentials holder to said gNB/AMF or eNB/MME (11) said unique subscription identifier, said corresponding keys and said security parameters;
h) Sending (28) from said gNB/AMF or eNB/MME (11) to said user equipment (10) in a message protected in integrity and confidentiality by said PLS key or by keys derived from said PLS key said unique subscription identifier, said corresponding keys and said security parameters, said credentials comprising said subscription identifier, said corresponding keys and said security parameters.

2. A method according to claim 1, wherein said data permitting to identify said user of said user equipment (10) or said user equipment (10) are at least one of:
- the user equipment (10) Id;
- the user Id;
- a provisioning code.

3. A method according to claims 1 or 2, wherein steps -c- and -d- also comprise sending a provisioning code and step -e- also comprises a verification of said provisioning code.

4. A method according to claims 1 to 3, wherein steps -c- and -d- also comprise sending a time label and/or a localization information and step -e- also comprises a verification of said time label and/or said localization information.

5. A method according to any of the claims 1 to 4 wherein said credentials are stored in a secure element of said user equipment (10) or in the mobile equipment of said user equipment (10).

6. A method according to any of the claims 1 to 5 wherein said unique subscription identifier is an IMSI or a SUPI.

7. A method according to any of the claims 1 to 6 wherein said credentials holder is constituted by a ARPF/UDM or a AuC.

8. A method for provisioning a credentials holder (12) with credentials in a private telecommunication network, said private telecommunication network comprising a user equipment (10) and a gNB/AMF or a eNB/MME (11), said method comprising:
a) Sending from said user equipment (10) to said gNB/AMF or eNB/MME (11) a provisioning request;
b) Establishing a PLS key between said user equipment (10) and said gNB/AMF or eNB/MME (11) thanks to Physical Layer Security;
c) Sending from said user equipment (10) to said gNB/AMF or eNB/MME (11) a message comprising data permitting to identify the user of said user equipment (10) or said user equipment (10), said message being protected in integrity and confidentiality by said PLS key or by keys derived from said PLS key;
d) Sending from said gNB/AMF or eNB/MME (11) to said credentials holder (12) said data permitting to identify said user of said user equipment (10) or said user equipment (10);
e) Verifying at said credentials holder (12) said data permitting to identify the user of said user equipment (10) or said user equipment (10);
f) If said verification is positive, allocating at said credentials holder (12) a unique subscription identifier to said user equipment (10);
g) Sending from said credentials holder (12) to said gNB/AMF or eNB/MME (11) said unique subscription identifier;
h) Sending from said gNB/AMF or eNB/MME (11) to said user equipment (10) in a message protected in integrity and confidentiality by said PLS key or by keys derived from said PLS key said unique subscription identifier;
i) Generating at said user equipment (10) keys and security parameters;
j) Sending from said user equipment (10) to said gNB/AMF or eNB/MME (11) said keys and security parameters protected in integrity and confidentiality by said PLS key or by keys derived from said PLS key;
k) Sending from said gNB/AMF or eNB/MME (11) the received keys and security parameters to said credentials holder (12), said credentials comprising said keys, said security parameters and said unique subscription identifier.

9. A method according to claim 8, wherein said data permitting to identify said user of said user equipment (10) or said user equipment (10) are at least one of:
- the user equipment (10) Id;
- the user Id;
- a provisioning code.

10. A method according to any of the claims 8 and 9, wherein steps -c- and -d- also comprise sending a provisioning code and step -e- also comprises a verification of said provisioning code.

11. A method according to any of the claims 8 to 10, wherein steps -c- and -d- also comprise sending a time label and/or a localization information and step -e- also comprises a verification of said time label and/or said localization information.

12. A method according to any of the claims 8 to 11 wherein said credentials are stored in a secure element of said user equipment (10) or in the mobile equipment of said user equipment (10).

13. A method according to any of the claims 8 to 12 wherein said unique subscription identifier is an IMSI or a SUPI.

14. A method according to any of the claims 8 to 13 wherein said credentials holder (12) is constituted by a ARPF/UDM or a AuC.
